# EUROPEAN PATENT SPECIFICATION

(11) **EP 3 784 033 B1**
(45) Date of publication and mention of the grant of the patent: **10.04.2024**
(21) Application number: 19728525.7
(22) Date of filing: 25.04.2019
(51) Int. Cl.: A01K 63/04

(54) **WATER FILTER FOR AN AQUARIUM**
WASSERFILTER FÜR EIN AQUARIUM
FILTRE À EAU POUR UN AQUARIUM

(30) Priority: 26.04.2018 PL 42537318
(43) Date of publication of application: 03.03.2021
(73) Proprietor: Aquael Sp. z o.o., 02-849 Warszawa (PL)
(72) Inventor: JANKIEWICZ, Janusz, 02-849 Warszawa (PL); BRZESKI, Jerzy, 05-090 Raszyn (PL); KONTER, Stanislaw, 00-150 Warszawa (PL); SIENKIEWICZ, Marcin, 03-922 Warszawa (PL); JANKOWSKI, Piotr, 08-443 Sobienie-Jeziory (PL)
(74) Representative: JWP Patent & Trademark Attorneys
(86) International application number: PCT/IB2019/053415
(87) International publication number: WO 2019/207520

(56) References cited:
- EP-A1- 2 281 452
- US-A1- 2006 060 514

## Description

The object of this invention is a water filter for aquarium, in particular the one used in external water filtration systems for fish farming and in waterholes. The prior art external filters for purification of water in an aquarium and waterhole are connected to a dedicated water circuit by means of conduits that are positioned within water inlet and water outlet connecting ports secured in the filter cover. As a rule such filters are separate, i.e. external, components of aquarium or waterhole equipment, and positioned close to the reservoir in which it operates.

Contaminated water fed into the filter passes a sequence of filtration stages and types in the course of which, suitably to the filtration cartridge or means used, mechanical, biological and chemical filtration may be performed.

Due to the specific nature and effectiveness of water purification performed, it is preferable to perform mechanical filtration first - regardless whether as an exclusive or initial step of purification from mechanical impurities. The external filter draws water from an aquarium along with particulate wastes in it, including the organic ones that cause very rapid clogging of the filtration media and impairing effectiveness of the water purification process consequently. The related necessity for frequent changes of filtration cartridges within the entire device causes a need for new constructional solutions to enable comfortable and easy access to the individual water purification levels.

Document EP 2356900 B1 discloses an external filter for purifying water in aquarium, comprising chamber of mechanical filtration, constituting a part of water purification, extending vertically inside the housing of the filter, and separated from the main filtration unit. Within the mentioned mechanical filtration chamber a first step of water purification is carried out, to separate particles or mechanical debris therefrom. The mechanical debris filtered out in the chamber is then conveyed to a removable drawer at the bottom of the filter. Access to the mechanical filtration chamber and the main filtration unit within the filter is possible by removing a filter cover attached to its housing by means of a snap-fit connection.

Document EP 1832164 B1 discloses an external filter for an aquarium with an additional level of a roughing filter positioned at the upper part of the device, just beneath the cover. The main filtration chamber is positioned inside the housing in its central part and below the roughing filter. Water fed to the filter is conveyed downwards within the device and, first of all, passes through the roughing filtration level, and then upwards to an outlet provided in the cover - it flows through subsequent filtration levels in the main chamber of the filter container. Access to the individual filtration levels is possible by removing the cover positioned on the device housing.

Similarly, document EP2281452 A1 discloses a filtering unit for aquariums, designed to allow easy removal and repositioning of at least one filtering cartridge comprising: a container, provided with a fluid inlet and a fluid outlet to allow fluid communication thereof with an aquarium tank, inside said container a filtering path being defined which connects said flow inlet and said flow outlet as well as pumping means intended to move a liquid flow along said filtering path. Said first vertically extractable filtering cartridge defines an internal volume connected, via an inlet mouth, to an upstream portion of the filtering path. The first filtering cartridge is housed in a well and allows the release of the water contained in the first internal volume towards the well. Said well extends vertically from above inside the container and is connected to a downstream portion of the filtering path via an outflow apertur 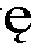 . Moreover, the first filtering cartridge comprises a lower impermeable portion, designed to retain a volume of liquid in its interior in the case of extraction from the well of the cartridge.

In the presented solutions access to filtration levels is possible exclusively upon removal of the entire cover which entails a necessity to remove water circulation conduits or at least the water inlet and outlet ports arranged in the cover.

It is the object of this invention to propose a better construction of the external water filter for aquariums, with an easier access to the individual filtration levels, in particular a roughing filtration level, without the hitherto required disassembling of the filter cover or components comprised by it.

Water filter for an aquarium according to the invention comprises a housing in a form of an upwardly open container of a canister type, with side walls and filtration cartridges housed therein, as well as a cover attached to the housing and accommodating a priming arrangement and connection ports of water inlet and water outlet arrangements, where the water inlet and water outlet arrangements are provided with valves. The body of the cover encompasses a jacket and side walls with a rim formed at the periphery thereof. The water filter is characterized in that in the cover a roughing filter chamber with a removable container for the filtration cartridge is formed that is covered at the top by a lid arranged within the cover. The chamber of the roughing filter is connected to the water inlet arrangement by means of an inlet opening formed in its rear wall, and it has an outlet opening to guide water to the filtration cartridges provided inside of the housing. The lid is hinged on the cover with one end, and the other end is secured to the housing by means of a snap-fit connection and the cover is secured to the housing by means of the snap-fit connection encompassing first closing clamps and second closing clamps, seated hingedly in the side walls of the housing and to be snapped on the rim of the cover. The cover is secured to the housing by means of the first closing clamp and a front wall of the lid is attached to the housing by means of the entire second closing clamp. Release of the respective second closing clamps enables opening of the lid while maintaining attachment of the cover.

Preferably, in one part of the cover body a priming arrangement and water inlet and water outlet arrangements are positioned, and in the other part a roughing filter chamber with a filtration cartridge is formed.

Preferably, the lid is suspended in the cover by means of hinges that are fastened in the head surface of the cover jacket.

Preferably, the outlet opening is surrounded by the jacket, where the height of the jacket is not less than the height of the filtration cartridge in the roughing filter chamber.

Preferably, the removable container for a filtration cartridge that is positioned inside the chamber of the roughing filter, on its rear wall has an inlet opening of the container whose positioning corresponds to the inlet opening of the chamber, and in the top wall it has an outlet opening of the container which is positioned around the entrance of the jacket that surrounds the outlet opening of the chamber.

Also preferably, the inlet opening of the container is covered from the inside of the container by a pivotable flap suspended in its rear wall.

Preferably, the second closing clamp is suspended on rotatable arms, at both sides around each first closing clamp, and in the closed position of the closing clamps, the first closing clamp is covered by the second closing clamp.

Also preferably, the first closing clamp and the second closing clamp are terminated in hook-shaped ends.

Further preferably, on each of the side walls of the housing an identical pattern of first closing clamps and second closing clamps is provided.

Preferably, the cover is attached to the housing by means of three second closing clamps, seated on the respective adjacent side walls of the housing.

Further preferably, the water inlet arrangement has an inlet ball valve and at least one check valve.

Preferably, the inlet ball valve is at least a double-seat valve.

Preferably, the inlet ball valve is a double-seat valve.

The object of the invention is shown in embodiments in the drawing where:
fig. 1 shows a perspective view of a water filter for an aquarium according to this invention,
fig. 2 shows an exploded view of a housing of a water filter for an aquarium according to the invention,
fig. 3 shows a partial and simplified cross-sectional view illustrating water inlet and water outlet arrangements,
fig. 4 shows a cross-sectional view illustrating a water inlet arrangement and a roughing filter chamber, with connection detached ports,
fig. 5 shows a cross-sectional view illustrating a water outlet arrangement,
fig. 6 shows a perspective view of a filter cover,
fig. 7 shows a perspective view of a filter cover with an open lid,
fig. 8 shows a perspective view from the top of a filter, in an open position of the lid, illustrating a roughing filter chamber,
fig. 9 shows securing of a cover in a closed position of the lid, and
fig. 10 shows a view analogous as in fig. 8, in an open lid position.

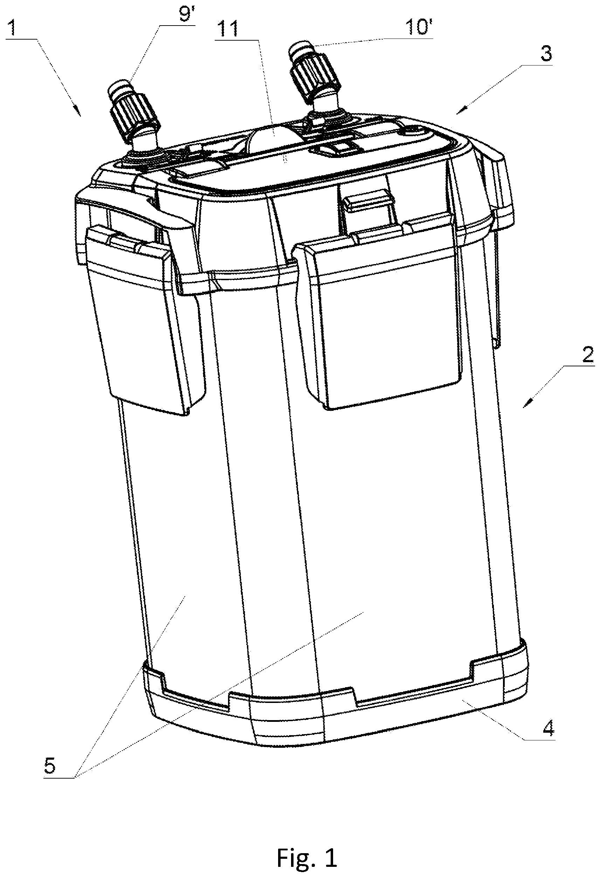

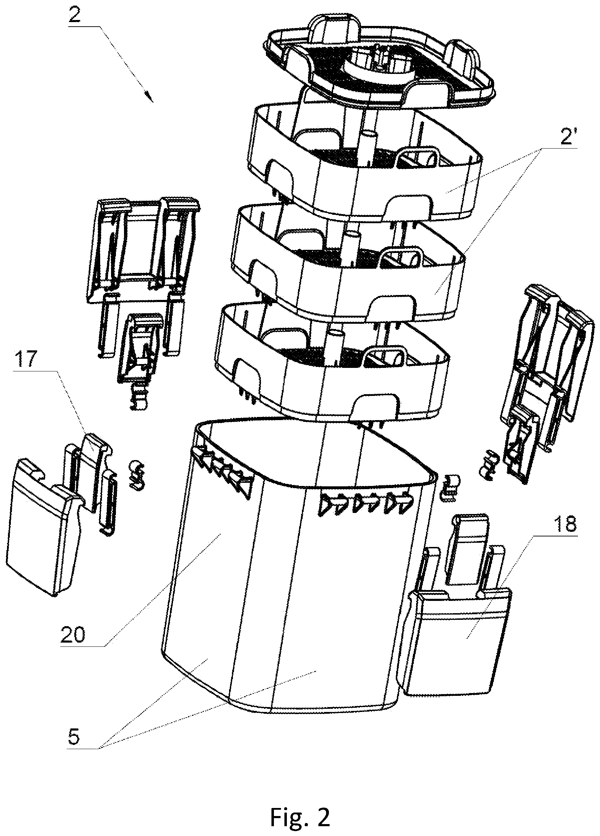

According to fig. 1, a water filter 1 for an aquarium comprises a housing 2 and a lid 3 secured thereto. The housing 2 is formed as a vertical, open at its top container of a canister type, with side walls 5, seated in a base 4. Inside the housing 2 filtration cartridges are arranged that may be constituted by standard filtration media, such as for example activated carbon or foam cartridges. Filtration cartridges are arranges in containers 2', which as shown in figs. 2, 4 or 5, are arranged inside the housing 2 one above another, and form a vertical set of sequenced levels with filtration cartridges.

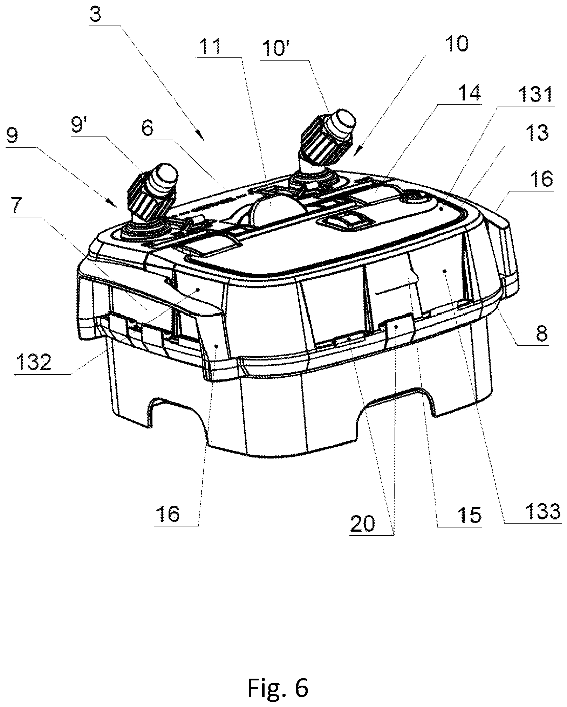

The cover 3 is secured to the housing 2 removably and - as presented in fig. 6 - its body includes a jacket 6 and side walls 7 with a rim 8 formed on their perimeter. During mounting the cover 3 in the housing 2, the body of the cover 3 - in the section below the rim 8 - is seated inside the side walls 5 of the housing 2 so that the mentioned section of the body of the rim 3 remains invisible during operation of the filter 1.

According to the embodiment shown, in one part of the body of the cover 3 connection ports 9', 10' are arranged for water inlet 9 and water outlet 10 arrangements respectively, positioned within the cover 3, as well as a piston 11 of a priming arrangement. In a second part of the body of the cover 3 a chamber of a roughing filter 12 is formed, intended for effecting roughening mechanical filtration therein.

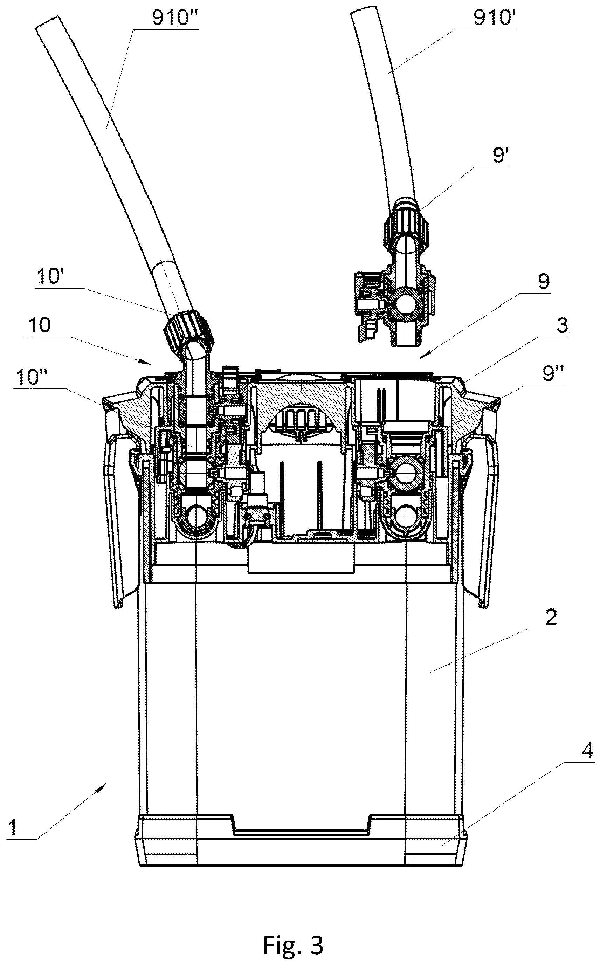

Fig. 3 shows a partial and simplified cross-sectional view of the filter 1 illustrating the water inlet 9 and the water outlet 10 arrangements. In the cover 3 removable connection ports 9', 10' are secured - for the water inlet 9 and the water outlet 10 arrangements, respectively. To said ports 9', 10' a water draining conduit 910' and a water supply conduit 910" are connectable from and to the reservoir in a form of an aquarium or a water hole (not show) in which the filter 1 operates). The connection ports 9', 10' are connectable to the water inlet 9 and water outlet 10 arrangements to form an inlet valve 9" and an outlet valve 10", respectively, which according to the embodiment are double-seated ball valves.

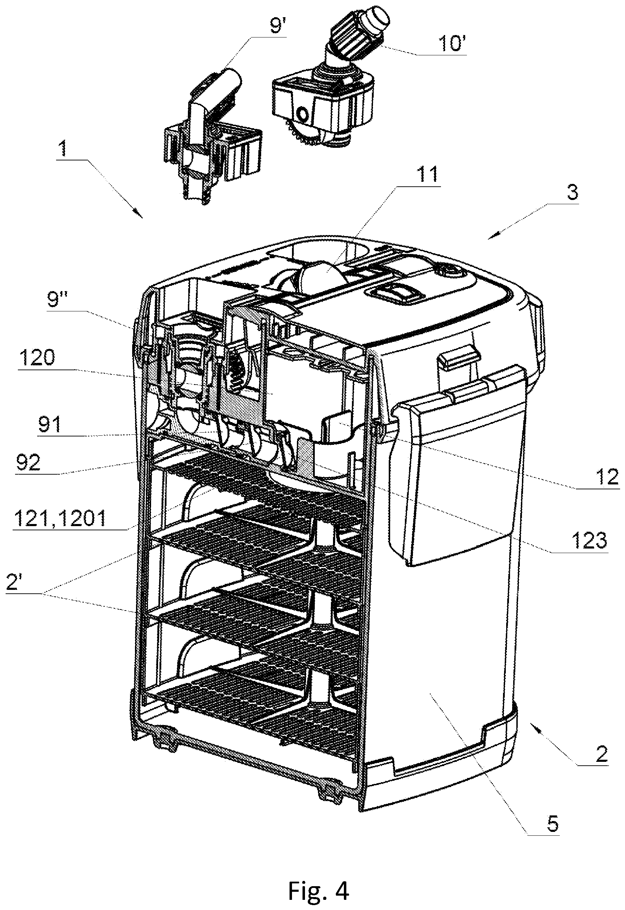

Construction of the water inlet 9 arrangement is shown in fig. 4, according to which, downstream the double-seated ball valve 9", a water inlet 9 arrangement - cooperating with a priming arrangement (not shown), provided with two check valves arranged in order to prevent water backflow during priming the filter 1. The check valves are constituted by a first closing flap 91 and a second closing flap 92. The use of check valves 91 and 92 prevents water backflow during priming the filter 1 and thus enables guiding water from an aquarium or a waterhole directly to the chamber of the roughing filter 12, connected to the water inlet arrangement, and then to the subsequent filtration cartridges provided in the housing 2 of the filter 1.

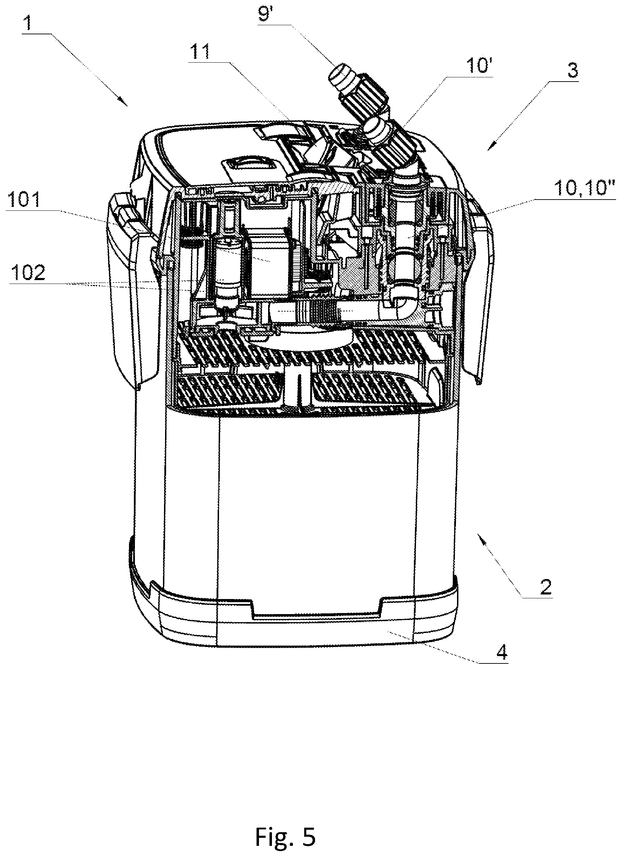

As presented in fig. 5, water finally filtered inside the housing 2 is drawn by a pump 102, driven by a motor 101 and directed to a water outlet 10 arrangement terminated in a connection port 10', and then it is guided through a draining conduit 910" to a reservoir (not shown).

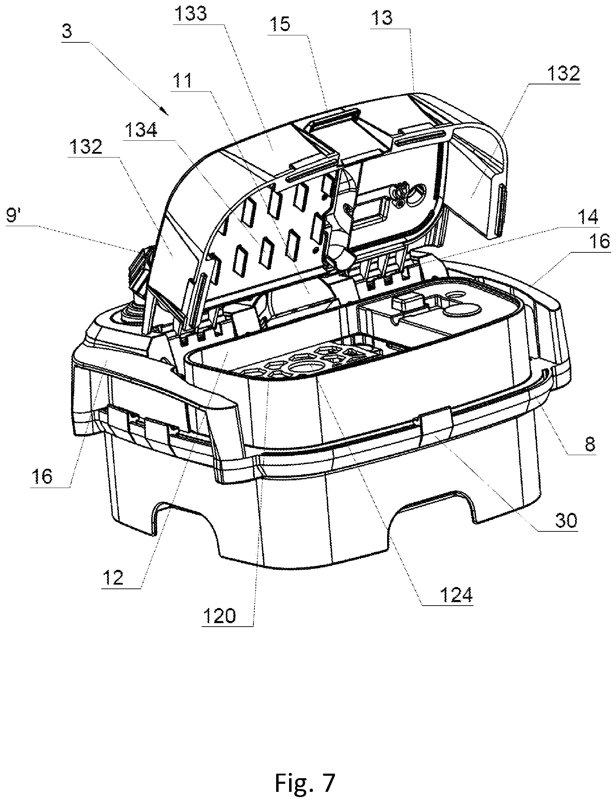

The chamber of the roughing filter 12 is externally covered with an openable lid 13 which - in its closed position - forms a continuous body of the jacket 6 of the cover 3. The lid 13 has an top wall 131, side walls 132 and a front wall 133. According to the embodiment shown in figs. 6-8, the lid 13 is pivotably suspended on hinges 14 which are secured on the head surface of the jacket 6 of the cover 3. The lid 13 is openable by means of a handle 15 formed in its front wall 133.

Apart from the handle 15 of the lid 13, the cover 3 is also provided with handles 16, to enable its comfortable and easy, for the user, removal from the housing 2 of the filter 1. According to an embodiment, the cover 3 has two handles 16, positioned on the side walls 7 of the cover 3, perpendicularly to the surface on which the handle 15 of the lid 13 is positioned.

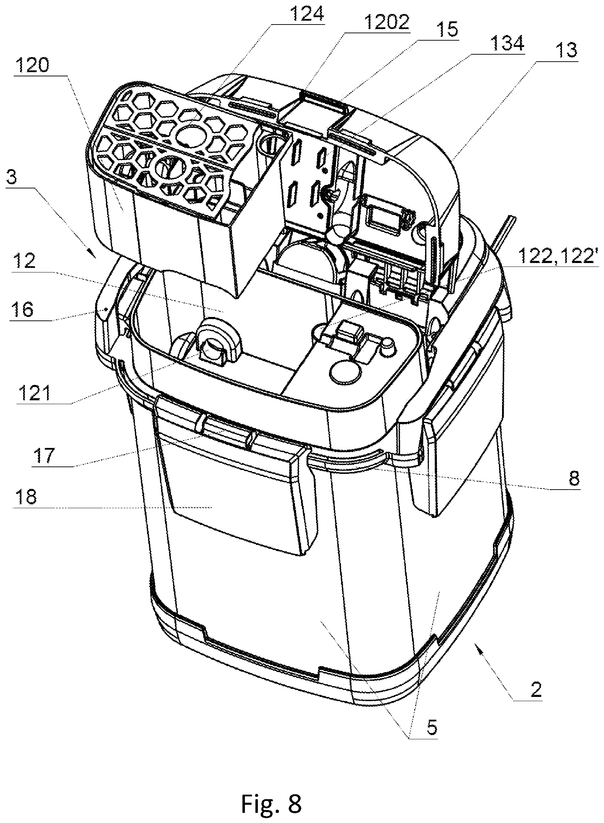

According to fig. 8, the chamber of the roughing filter 12 is connected to the arrangement of the water inlet 9 by means of an outlet opening 121 formed in its wall, and has an outlet opening 122 to guide water further to the inside of the housing 2 and the filtration cartridges provided therein. The outlet opening of the chamber 122 is surrounded by a jacket 122' the height of which is not less than the height of the filtration cartridge inside the chamber of the roughing filter 12.

In the chamber of the roughing filter 12 a removable container 120 for the filtration cartridge is arranged. The container 120 for the filtration cartridge, in its rear wall, has an outlet opening 1201, corresponding to the inlet opening 121 of the chamber of the roughing filter 12. At the container 120 positioned in the chamber of the roughing filter 12, the positions of the inlet opening 1201 of the container 120 and the inlet opening 121 of the chamber 12 overlap to form a water inlet 9 arrangement with the chamber of the roughing filter 12. In particular as shown in fig. 4, the inlet opening 1201 of the container 120 is covered from the inside of the container 120 by a pivotable flap 123 suspended in its rear wall (as shown in fig.4). The flap 123 is used to prevent water entering the chamber of the roughing filter 12 w during withdrawal therefrom of the container 120 for the filtration cartridge.

The container 120 for the filtration cartridge additionally has, formed its top wall, an outlet opening 1202, which - in the position of the container 120 placed in the chamber of the roughing filter 12 - becomes coupled to the entrance of the jacket 122' that surrounds the outlet opening 122 of the chamber 12.

According to the embodiment shown, the container 120 for the filtration cartridge has, formed in its top wall, openings 124 that enable free and comfortable for the user removing of the container 120 from the chamber of the roughing filter 12. At the same time, on the inner side of the top wall 131 of the lid 13 pressing elements 134 are formed that - with the lid 13 closed - press, through the openings 124, the filtration cartridge (not shown), intended to be placed in the container 120 for the filtration cartridge.

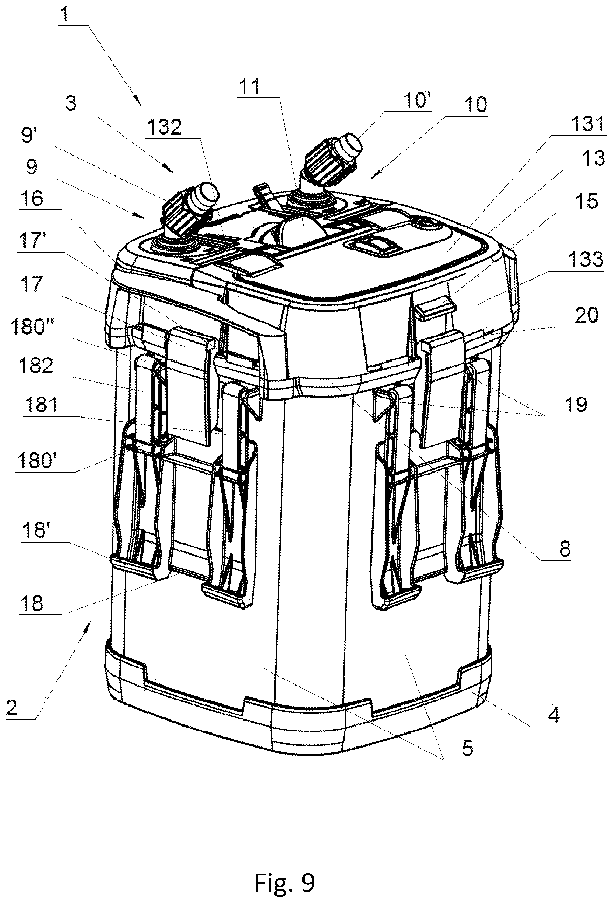

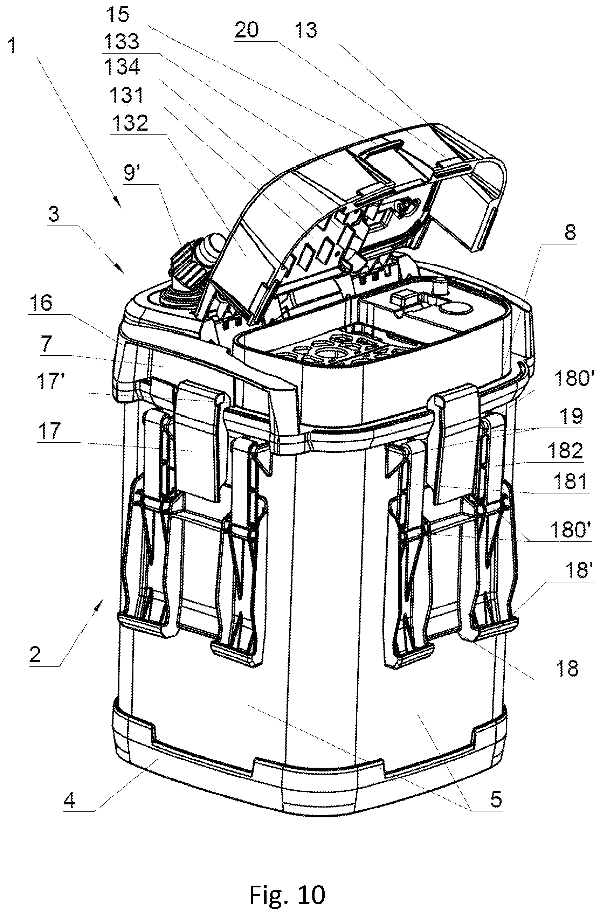

As shown in figs. 9 and 10, the cover 3 is secured to the housing 2 by means of a first closing clamp 17 and a second closing clamp 18, snapped on a rim 8 of the cover 3. The first 17 and second 18 closing clamps are seated in the side walls 5 of the housing 2 by means of articulation joints 19 - an exemplary arrangement thereof is shown in an exploded view in fig. 2.

The first closing clamp 17 with a hook terminating end 17' is seated on the side wall 5 of the housing 2, substantially in a position corresponding to a half of the height of the side wall 5 and below its upper edge. On both sides around the first closing clamp 17, on the side wall 5 of the housing 2, the second closing clamp 18 is hingedly attached.

The second closing clamp 18 is formed in a form of a profiled plate with hook-shaped terminating ends 18'. The second closing clamp 18 is rotationally suspended on first ends 180' of a first arm 181 and a second arm 182. Second ends 180" of the first 181 and second 182 arms are suspended rotationally in articulated joints 19. In the closed position of the two closing clamps 17, 18 the first closing clamp 17 remains covered by the second closing clamp 18 extending thereabove.

According to the commented embodiment of the water filter 1 for an aquarium, on each of the side walls 5 of the housing 2 an identical pattern of the first 17 and second 18 closing clamps is provided. This solution provides freedom for positioning, as to orientation, of the seating of the cover 3 in the housing 2, i.e. regardless of the positioning of the arrangements of the inlet 9 and outlet 10 and, in particular, the chamber of the roughing filter 12.

As shown in figs. 9 and 10, attachment of the cover 3 to the housing 2 is ensured by the first closing clamp 17 and a second closing clamp 18 positioned on each of the side walls 5 of the housing 2. The snap-fit connection is made as a result of intermeshing of the hook-shaped terminal ends 17', 18' of the closing clamps, correspondingly the first ones 17 and the second ones 18, with tongues 20 formed within the region of the rim 8 of the cover 3.

As regards the lid 13, its front wall 133 is attached to the housing 2 by means of the entire second closing clamp 18, seated on the respective side wall 5 of the housing 2. Attachment of the side walls 132 of the lid 13 is in turn ensured by snap-fit intermeshing effected solely by the closest - relative to the surface of the front wall 133 lid 13 - hook-shaped terminating end 18' of the second closing clamp 18, secured on the respective side wall 5 of the housing 2.

Release of the respective second closing clamps 18 enables opening of the lid 13, while maintaining attachment of the cover 3, provided by closed first closing clamps 17 and possibly the remaining non-released second closing clamp 18, positioned at the rear part of the filter 1. As regards the lid 13, the catches 20 to be intermeshed with the hook-shaped terminal ends 18' of the second closing clamps 18 that secure the lid 13, are positioned at the lower edges of the walls 132, 133 of the lid 13.

The described herein solution for securing the lid 13 provides for a possibility of free access to the chamber of the roughing filter 12 positioned within the cover 3, without any necessity to remove the cover 3.

It should be clear that the subject invention is not limited to the above presented embodiment and that diverse modifications and developments thereof are possible within the scope of the enclosed patent claims.

## Claims

1. Water filter for an aquarium, comprising a housing (2) in a form of an open at its top container of a canister type, with side walls (5) and filtration cartridges positioned therein, as well as a cover (3) secured to the housing (2) with a priming arrangement provided therein and connections ports (9', 10') of water inlet (9) and water outlet (10) arrangements, where the water inlet (9) and water outlet (10) arrangements are provided with valves (9", 10"), the body of the cover (3) encompassing a jacket (6) and side walls (7) with a rim (8) formed at the periphery thereof, **characterized in that** in the cover (3) a chamber of a roughing filter (12) with a removable container (120) for the filtration cartridge is arranged, said chamber of a roughing filter (12) is covered at the top with a lid (13) positioned in the cover (3), wherein the chamber of the roughing filter (12) is connected to the water inlet (9) arrangement by means of an inlet opening (121) formed in its rear wall, and it has an outlet opening (122) to guide water to the filtration cartridges provided inside of the housing (2), **and in that** the lid (13) is hinged on the cover (3) with one end, and the other end is secured to the housing (2) by means of a snap-fit connection, and the cover (3) is secured to the housing (2) by means of the snap-fit connection encompassing first closing clamps (17) and second closing clamps (18), seated hingedly in the side walls (5) of the housing (2) and to be snapped on the rim (8) of the cover (3), wherein the cover (3) is secured to the housing (2) by means of the first closing clamp (17) and a front wall (113) of the lid (13) is attached to the housing (2) by means of the entire second closing clamp (18), wherein release of the respective second closing clamps (18) enables opening of the lid (13) while maintaining attachment of the cover (3).

2. Filter according to claim 1, **characterized in that** in one part of the cover (3) the priming arrangement and the water inlet (9) and water outlet (10) arrangement are positioned, and at the other part the chamber of the roughing filter (12) with filtration cartridge are positioned.

3. Filter according to claim 1 or 2, **characterized in that** the lid (13) is suspended in the cover (3) by means of hinges (14) that are secured in the head surface of a jacket (6) of the cover (3).

4. Filter according to any of the claims 1-3, **characterized in that** the outlet opening (122) is surrounded by a jacket (122'), where the height of the jacket (122') is not less than the height of the filtration cartridge in the chamber of the roughing filter (12).

5. Filter according to claim 4, **characterized in that** the removable container (120) for the filtration cartridge that is positioned inside the chamber of the roughing filter (12) on its rear wall has an inlet opening (1201) the positioning of which corresponds to the inlet opening (121) of the chamber (12), and in the top wall it has a formed therein outlet opening (1202) which is positioned around the entrance of the jacket (122') surrounding the outlet opening (122) of the chamber (12).

6. Filter according to claim 5, **characterized in that** the inlet opening (1201) of the container (120) is covered from the inside of the container (120) by a pivotable flap (123) suspended in its rear wall (123).

7. Filter according to any of claims 1-6, **characterized in that** the second closing clamp (18) is suspended on rotatable arms (181, 182), at both sides around each first closing clamp (17), where in the closed position of the closing clamps (17, 18) the first closing clamp (17) is covered by the second closing clamp (18).

8. Filter according to any of claims 1-7, **characterized in that** the first closing clamp (17) and the second closing clamp (18) are terminated in a hook-shaped end.

9. Filter according to any of claims 1-8, **characterized in that** on each side wall (5) of the housing (2) an identical pattern of first closing clamps (17) and second closing clamps (18) is provided.

10. Filter according to any of claims 1-9, **characterized in that** the lid (13) is secured to the housing (2) by means of three second closing clamps (18), seated respectively on the adjacent side walls (5) of the housing (2).

11. Filter according to claim 1, **characterized in that** the water inlet (9) arrangement has an inlet ball valve (9") and at least one check valve (91, 92).

12. Filter according to claim 11, **characterized in that** the inlet ball valve (9") is at least a double-seat valve.

13. Filter according to claim 12, **characterized in that** the inlet ball valve (9") is a double-seat valve.

## Patentansprüche

1. Wasserfilter für ein Aquarium, umfassend ein Gehäuse (2) in Form eines von oben offenen kanisterartigen Behälters, mit Seitenwänden (5) und darin positionierten Filtrationskartuschen, sowie einen am Gehäuse (2) befestigten Deckel (3) mit einer darin vorgesehenen Befüllanordnung und Anschlussstutzen (9', 10') der Wassereinlass- (9) und Wasserauslass- (10) Anordnungen, wobei die Wassereinlass- (9) und Wasserauslass- (10) Anordnungen mit Ventilen (9", 10") versehen sind, wobei der Körper des Deckels (3) einen Mantel (6) und Seitenwände (7) mit einem am Umfang davon ausgebildeten Rand (8) umfasst, **dadurch gekennzeichnet, dass** eine Kammer eines Grobfilters (12) mit einem herausnehmbaren Behälter (120) für die Filtrationskartusche im Deckel (3) angeordnet ist, wobei die Kammer eines Grobfilters (12) mit einer im Deckel (3) positionierten Kappe (13) oben abgedeckt ist, wobei die Kammer des Grobfilters (12) über eine in ihrer Rückwand ausgebildete Einlassöffnung (121) mit der Wassereinlass- (9) Anordnung verbunden ist und eine Auslassöffnung (122) aufweist, um Wasser zu den im Inneren des Gehäuses (2) vorgesehenen Filtrationskartuschen zu führen, **und dadurch, dass** die Kappe (13) mit einem Ende am Deckel (3) klappbar ist, und das andere Ende ist mittels einer Schnappverbindung am Gehäuse (2) befestigt ist, und der Deckel (3) am Gehäuse (2) mittels der Schnappverbindung befestigt ist, die erste Verschlussklammern (17) und zweite Verschlussklammern (18) umfasst, die klappbar in den Seitenwänden (5) des Gehäuses (2) gelagert und auf den Rand (8) des Deckels (3) aufzuschnappen sind, wobei der Deckel (3) mittels der ersten Verschlussklammer (17) am Gehäuse (2) befestigt ist und eine Vorderwand (113) der Kappe (13) mittels der gesamten zweiten Verschlussklammer (18) am Gehäuse (2) angebracht ist, wobei das Lösen der jeweiligen zweiten Verschlussklammern (18) das Öffnen der Kappe (13) unter Beibehaltung der Anbringung des Deckels (3) ermöglicht.

2. Filter nach Anspruch 1, **dadurch gekennzeichnet, dass** in einem Teil des Deckels (3) die Befüllanordnung und die Wassereinlass- (9) und Wasserauslass- (10) Anordnung positioniert sind, und im anderen Teil die Kammer des Grobfilters (12) mit der Filtrationskartusche positioniert sind.

3. Filter nach Anspruch 1 oder 2, **dadurch gekennzeichnet, dass** die Kappe (13) mittels Scharnieren (14), die in der Stirnfläche eines Mantels (6) des Deckels (3) befestigt sind, im Deckel (3) aufgehängt ist.

4. Filter nach einem der Ansprüche 1-3, **dadurch gekennzeichnet, dass** die Auslassöffnung (122) von einem Mantel (122') umgeben ist, wobei die Höhe des Mantels (122') nicht geringer als die Höhe der Filtrationskartusche in der Kammer des Grobfilters (12) ist.

5. Filter nach Anspruch 4, **dadurch gekennzeichnet, dass** der herausnehmbare Behälter (120) für die Filtrationskartusche, der im Inneren der Kammer des Grobfilters (12) positioniert ist, eine Einlassöffnung (1201) an seiner Rückwand aufweist, deren Positionierung der Einlassöffnung (121) der Kammer (12) entspricht, und in der oberen Wand eine darin ausgebildete Auslassöffnung (1202) aufweist, die um den Eingang des Mantels (122') herum positioniert ist und die Auslassöffnung (122) der Kammer (12) umgibt.

6. Filter nach Anspruch 5, **dadurch gekennzeichnet, dass** die Einlassöffnung (1201) des Behälters (120) von der Innenseite des Behälters (120) durch eine schwenkbare Klappe (123) abgedeckt ist, die in seiner Rückwand (123) aufgehängt ist.

7. Filter nach einem der Ansprüche 1-6, **dadurch gekennzeichnet, dass** die zweite Verschlussklammer (18) an drehbaren Armen (181, 182) beidseitig um jede erste Verschlussklammer (17) aufgehängt ist, wobei in der geschlossenen Position der Verschlussklammern (17, 18) die erste Verschlussklammer (17) von der zweiten Verschlussklammer (18) abgedeckt ist.

8. Filter nach einem der Ansprüche 1-7, **dadurch gekennzeichnet, dass** die erste Verschlussklammer (17) und die zweite Verschlussklammer (18) in einem hakenförmigen Ende enden.

9. Filter nach einem der Ansprüche 1-8, **dadurch gekennzeichnet, dass** an jeder Seitenwand (5) des Gehäuses (2) ein identisches Muster von ersten Verschlussklammern (17) und zweiten Verschlussklammern (18) vorgesehen ist.

10. Filter nach einem der Ansprüche 1-9, **dadurch gekennzeichnet, dass** die Kappe (13) mittels drei zweiten Verschlussklammern (18), die jeweils an den benachbarten Seitenwänden (5) des Gehäuses (2) gelagert sind, am Gehäuse (2) befestigt ist.

11. Filter nach Anspruch 1, **dadurch gekennzeichnet, dass** die Wassereinlass- (9) Anordnung ein Einlasskugelventil (9") und mindestens ein Rückschlagventil (91, 92) aufweist.

12. Filter nach Anspruch 11, **dadurch gekennzeichnet, dass** das Einlasskugelventil (9") mindestens ein Doppelsitzventil ist.

13. Filter nach Anspruch 12, **dadurch gekennzeichnet, dass** das Einlasskugelventil (9") ein Doppelsitzventil ist.

## Revendications

1. Filtre à eau pour aquarium, comprenant un boîtier (2) sous la forme d'un conteneur ouvert à sa partie supérieure de type bidon, avec des parois latérales (5) et des cartouches de filtration positionnées à l'intérieur, ainsi qu'une couverture (3) fixé au boîtier (2) avec un agencement d'amorçage prévu à l'intérieur et des ports de connexion (9', 10') des agencements d'entrée d'eau (9) et de sortie d'eau (10), où les agencements d'entrée d'eau (9) et de sortie d'eau (10) sont munis de vannes (9", 10 "), le corps de la couverture(3) englobant une chemise (6) et des parois latérales (7) avec un rebord (8) formé à la périphérie de celles-ci, **caractérisé en ce que** une chambre d'un filtre grossier (12) avec un récipient amovible (120) pour la cartouche de filtration est disposée dans la couverture (3), ladite chambre d'un filtre grossier (12) est recouverte en haut d'un couvercle (13) positionné dans la couverture (3), où la chambre d'un filtre grossier (12) est connectée à l'agencement d'entrée d'eau (9) au moyen d'une ouverture d'entrée (121) formée dans sa paroi arrière, et il a une ouverture de sortie (122) pour guider l'eau vers les cartouches de filtration prévues à l'intérieur du boîtier (2), **et en ce que** le couvercle (13) est articulé sur la couverture (3) par une extrémité, et l'autre extrémité est fixée au boîtier (2) au moyen d'une connexion à encliquetage, et la couverture (3) est fixé au boîtier (2) au moyen d'une connexion à encliquetage englobant des premières pinces de fermeture (17) et des secondes pinces de fermeture (18), logées de manière articulée dans les parois latérales (5) du boîtier (2) et à encliqueter sur le rebord (8) de la couverture (3), où la couverture (3) est fixé au boîtier (2) au moyen de la première pince de fermeture (17) et une paroi avant (113) du couvercle (13) est fixée au boîtier (2) au moyen de la seconde pince de fermeture entière (18), où la libération des secondes pinces de fermeture respectives (18) permet l'ouverture du couvercle (13) tout en maintenant la fixation de la couverture (3).

2. Filtre selon la revendication 1, **caractérisé en ce que** dans une partie de la couverture (3), l'agencement d'amorçage et l'agencement d'entrée d'eau (9) et de sortie d'eau (10) sont positionnés, et dans l'autre partie, la chambre du filtre grossier (12) avec une cartouche de filtration est positionnée.

3. Filtre selon la revendication 1 ou 2, **caractérisé en ce que** le couvercle (13) est suspendu dans la couverture (3) au moyen de charnières (14) qui sont fixées dans la surface de tête d'une chemise (6) de la couverture (3).

4. Filtre selon l'une quelconque des revendications 1 à 3, **caractérisé en ce que** l'ouverture de sortie (122) est entourée par une chemise (122'), où la hauteur de la chemise (122') n'est pas inférieure à la hauteur de la cartouche de filtration dans la chambre du filtre grossier (12).

5. Filtre selon la revendication 4, **caractérisé en ce que** le récipient amovible (120) pour la cartouche de filtration qui est positionné à l'intérieur de la chambre du filtre grossier (12) sur sa paroi arrière a une ouverture d'entrée (1201) dont le positionnement correspond à l'ouverture d'entrée (121) de la chambre (12), et dans la paroi supérieure, il a une ouverture de sortie formée à l'intérieur (1202) qui est positionnée autour de l'entrée de la chemise (122') entourant l'ouverture de sortie (122) de la chambre (12).

6. Filtre selon la revendication 5, **caractérisé en ce que** l'ouverture d'entrée (1201) du récipient (120) est recouverte de l'intérieur du récipient (120) par un volet pivotant (123) suspendu dans sa paroi arrière (123).

7. Filtre selon l'une quelconque des revendications 1 à 6, **caractérisé en ce que** la seconde pince de fermeture (18) est suspendue à des bras rotatifs (181, 182), des deux côtés autour de chaque première pince de fermeture (17), où dans la position fermée des pinces de fermeture (17, 18), la première pince de fermeture (17) est recouverte par la seconde pince de fermeture (18).

8. Filtre selon l'une quelconque des revendications 1 à 7, **caractérisé en ce que** la première pince de fermeture (17) et la seconde pince de fermeture (18) se terminent par une extrémité en forme de crochet.

9. Filtre selon l'une quelconque des revendications 1 à 8, **caractérisé en ce que** sur chaque paroi latérale (5) du boîtier (2) est prévu un motif identique de premières pinces de fermeture (17) et de secondes pinces de fermeture (18).

10. Filtre selon l'une quelconque des revendications 1 à 9, **caractérisé en ce que** le couvercle (13) est fixé au boîtier (2) au moyen de trois secondes pinces de fermeture (18), logées respectivement sur les parois latérales adjacentes (5) du boîtier (2).

11. Filtre selon la revendication 1, **caractérisé en ce que** l'agencement d'entrée d'eau (9) a un clapet à bille d'entrée (9"') et au moins un clapet anti-retour (91, 92).

12. Filtre selon la revendication 11, **caractérisé en ce que** le clapet à bille d'entrée (9") est au moins un clapet à double siège.

13. Filtre selon la revendication 12, **caractérisé en ce que** le clapet à bille d'entrée (9") est un clapet à double siège.
